# EUROPÄISCHE PATENTANMELDUNG

(11) **EP 0 814 009 A2**
(43) Veröffentlichungstag der Anmeldung: **29.12.1997**
(21) Anmeldenummer: 97109929.6
(22) Anmeldetag: 18.06.1997
(51) Int. Cl.: B62B 3/18

(54) **Stapelbarer Einkaufswagen**

(30) Priorität: 19.06.1996 DE 29610791 U
(71) Anmelder: WANZL METALLWARENFABRIK GMBH, D-89336 Leipheim (DE)
(72) Erfinder: Blaha, Martin, 89335 Ichenhausen (DE)

(57) **Zusammenfassung**

Die Erfindung betrifft einen stapelbaren Einkaufswagen (1), mit einem Fahrgestell (2), das sich in Schieberichtung verjüngt, mit einem oberen, in gleicher Weise konisch gestalteten Korb (14) mit rückwärtig schwenkbarer Wand (16), mit einer im hinteren Bereich (4) des Fahrgestelles (2) vorgesehenen Schiebeeinrichtung (13) und mit einem unteren, ebenfalls konisch gestalteten und mit einer schwenkbaren Wand (21) ausgestatteten Korb (19).
Es ist vorgesehen, das Fahrgestell (2) mit zwei Längsholmen (5) auszustatten, die einen unteren, die Fahrrollen (12) tragenden Abschnitt (6) und einen nach oben und nach hinten, die Schiebeeinrichtung (13) tragenden Abschnitt (7) aufweisen, wobei sich der untere Korb (19), bezogen auf den oberen Korb (14), entgegengesetzt zur Schieberichtung verjüngt und die schwenkbare Wand (21) des unteren Korbes (19) im vorderen Bereich (3) des Fahrgestelles (2) angeordnet ist.

## Beschreibung

Die Erfindung betrifft einen stapelbaren Einkaufswagen, mit einem Fahrgestell, das sich in Schieberichtung verjüngt, mit einem oberen, in gleicher Weise konisch gestalteten Korb mit rückwärtig schwenkbarer Wand, mit einer im hinteren Bereich des Fahrgestelles vorgesehenen Schiebeeinrichtung und mit einem unteren, ebenfalls konisch gestalteten und mit einer schwenkbaren Wand ausgestatteten Korb.

Durch die US-Patentschrift 2,890,057 ist ein Einkaufswagen bekannt, der die eben genannten Merkmale aufweist. Das konische Fahrgestell dieses Einkaufswagens weist einen U-förmigen, horizontal angeordneten Grundrahmen auf, von dessen rückwärtigem Bereich zu beiden Seiten je zwei Holme nach oben gerichtet sind, die einen oberen Korb tragen, der sich, wie der Grundrahmen, in Schieberichtung des Einkaufswagens verjüngt. Die Rückseite des somit ebenfalls konisch ausgebildeten Korbes schließt mit einer Wand ab, die sich in bekannter Weise um eine oben liegende horizontale Achse in das Korbinnere verschwenken läßt. Unterhalb des oberen Korbes befindet sich ein von hinteren Holmen getragener unterer Korb, der wie der obere Korb in gleicher Weise konisch gestaltet ist und dessen Rückseite ebenfalls mit einer schwenkbaren Wand abschließt. Querstege verbinden sowohl die hinteren Holme als auch die Längsseiten des Grundrahmens, wobei Fahrollen an dem so gestalten Fahrgestell befestigt sind, so daß sich der Einkaufswagen in gewohnter Weise mit Hilfe einer an der Rückseite des Einkaufswagens befindlichen Schiebeeinrichtung bewegen läßt.
Als nachteilig ist die aufwendige Gestaltung des Fahrgestelles zu werten. Zum Tragen des oberen Korbes sind immerhin vier Holme erforderlich, die zwangsläufig eine Erhöhung der Fertigungskosten bewirken.

Es ist Aufgabe der Erfindung, einen Einkaufswagen der gattungsgemäßen Art so weiterzuentwickeln, daß eine Vereinfachung des Fahrgestelles und daher eine Verringerung der Herstellkosten erzielbar ist und daß trotzdem sichergestellt ist, daß sich derart gestaltete Einkaufswagen platzsparend ineinanderschieben lassen.

Die Lösung der Aufgabe besteht darin, daß das Fahrgestell mit zwei Längsholmen ausgestattet ist, die einen unteren, die Fahrrollen tragenden Abschnitt und einen nach oben und nach hinten, die Schiebeeinrichtung tragenden Abschnitt aufweisen, wobei sich der untere Korb, bezogen auf den oberen Korb, entgegengesetzt zur Schieberichtung verjüngt und die schwenkbare Wand des unteren Korbes im vorderen Bereich des Fahrgestelles angeordnet ist.

Der Vorteil der Erfindung besteht darin, daß die beiden gleich gestalteten Längsholme nicht nur die Fahrrollen und die Schiebeeinrichtung sondern auch zusammen mit Querstreben den oberen und den unteren Korb tragen. Die nur einmal abgebogenen Längsholme sind somit äußerst einfach gestaltet, obwohl sie drei Funktionen erfüllen. Das Fahrgestell des Einkaufswagens zeichnet sich deshalb durch eine hohe Zweckmäßigkeit aus. Durch die einfache Maßnahme, den unteren Korb in entgegengesetzter Richtung zum oberen Korb anzuordnen, werden Zwischenräume zwischen dem unteren Korb und den Längsholmen gebildet, so daß beim Stapeln zweier Einkaufswagen ein großer Teil der beiden unteren Abschnitte der Längsholme eines rückwärtigen Einkaufswagens in den Zwischenräumen des vorausbefindlichen Einkaufswagens Platz finden. Die Zwischenräume entstehen durch die gegenläufige Konizität der Längsholme einerseits und dem unteren Korb andererseits.

Die Erfindung wird anhand eines Ausführungsbeispieles näher erläutert. Es zeigt
Fig. 1 einen mit zwei Körben ausgestatteten Einkaufswagen in räumlicher Darstellung sowie
Fig. 2 den gleichen Einkaufswagen in Draufsicht.

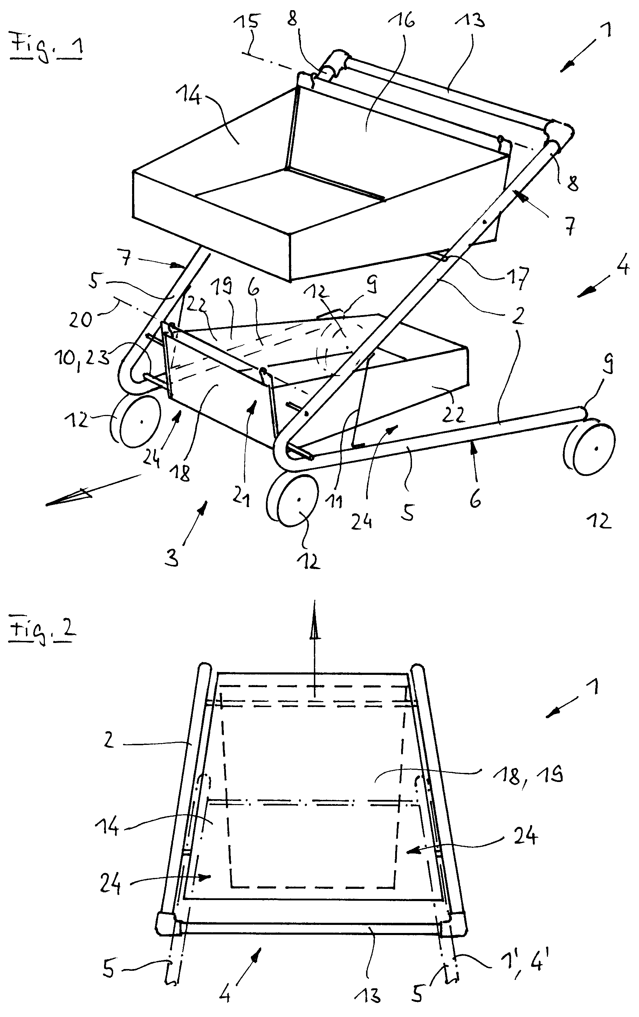

Der in Fig. 1 dargestellte Einkaufswagen 1 ist so gestaltet, daß er mit gleichen Einkaufswagen 1 platzsparend ineinanderschiebbar, also stapelbar ist.

Im Beispiel weist der Einkaufswagen 1 ein Fahrgestell 2 mit zwei Längsholmen 5 auf, die sich in Schieberichtung (Pfeil) des Einkaufswagens 1 einander nähern. Das Fahrgestell 2 verjüngt sich somit in Schieberichtung. Jeder Längsholm 5 besitzt einen unteren horizontalen Abschnitt 6 sowie einen nach oben und nach hinten führenden Abschnitt 7. Die Enden 8 der nach oben führenden Abschnitte 7 tragen eine Schiebeeinrichtung 13, die sich im hinteren Bereich 4 des Fahrgestelles 2 befindet. Die Enden 9 der horizontalen Abschnitte 7 wiederum sind mit je einer Fahrrolle 12 bestückt. Zwei weitere Fahrrollen 12 sind im vorderen Bereich 3 des Fahrgestelles 2 an den Längsholmen 5 befestigt. Zwischen den Längsholmen 5, die im vorderen Bereich 3 des Fahrgestelles 2 durch mindestens eine Querstrebe 10 verbunden sind, ist ein konisch gestalteter oberer Korb 14 angeordnet, der sich in gleicher Weise wie das Fahrgestell 2 in Schieberichtung des Einkaufswagens 1 verjüngt, also schmäler wird. In bekannter Weise ist der obere Korb 14 mit einer schwenkbaren Wand 16 ausgestattet, die sich, im hinteren Bereich des Fahrgestelles 4 angeordnet, um eine oben liegende horizontale Achse 15 in das Korbinnere verschwenken läßt. Der obere Korb 14 ist an den Längsholmen 5 befestigt und ruht zusätzlich auf einer weiteren Querstrebe 17. Es ist eine tiefer als der obere Korb 14 gelegene Ablage 18 vorgesehen, die gleichfalls als ein mit einer schwenkbaren Wand 21 ausgestatteter Korb 19 gestaltet ist. Die so gebildete Ablage 18 befindet sich ebenfalls zwischen den Längsholmen 5, ist an diesen befestigt und ruht auf wenigstens einer weiteren, die Längsholme verbindenden Querstrebe 23 oder auf der Querstrebe 10. Bezogen auf den oberen Korb 14 verjüngt sich der die Ablage 18 bildende Korb 19 entgegengesetzt zur Schieberichtung des Einkaufswagens 1, wobei die schwenkbare Wand 21 des Korbes 19 im vorderen Bereich 3 des Fahrgestelles 2 angeordnet ist. Die schwenkbare Wand 21 ist um eine oben liegende horizontale Achse 20 in das Innere des Korbes 19 und wieder zurück verschwenkbar angeordnet. Die schwenkbaren Wände 16, 21 der Körbe 14, 19 sind deshalb erforderlich, damit gleiche stapelbare Einkaufswagen 1 in bekannter Weise platzsparend ineinandergeschoben werden können. Durch die jeweils konische Form der Körbe 14, 19 ist dies möglich. Zwischen den horizontalen Abschnitten 6 der Längsholme 5 und den Seitenwänden 22 des Korbes 19 sind Zwischenräume 24 gebildet, die zur Aufnahme eines Teils der Längsholme 5 eines rückwärtigen Einkaufswagens 1 dann bestimmt sind, wenn es gilt, diesen rückwärtigen Einkaufswagen 1 in einen vorausbefindlichen Einkaufswagen 1 platzsparend einzuschieben, also zu stapeln. Beim Ineinanderschiebevorgang werden die schwenkbaren Wände 16, 21 des vorausbefindlichen Einkaufswagens 1 von den Stirnseiten der Körbe 14, 19 des einzuschiebenden Einkaufswagens 1 nach oben verschwenkt. Der obere Korb 14 kann in bekannter Weise eine Kindersitzeinrichtung oder dergleichen aufweisen. Ebenso können die horizontalen und die nach oben führenden Abschnitte 6, 7 der Längsholme 5 durch Stützstreben 11 verbunden sein.

Fig. 2 zeigt die konisch gegenläufige Anordnung der Körbe 14, 19. Von oben betrachtet erkennt man das in Schieberichtung (Pfeil) des Einkaufswagens 1 sich verjüngende Fahrgestell 2 mit der im hinteren Bereich 4 des Fahrgestelles 2 befindlichen Schiebeeinrichtung 13. Eingezeichnet sind ferner der in gleicher Weise konisch gestaltete obere Korb 14 sowie der entgegengesetzt zur Schieberichtung sich verjüngende, die Ablage 18 bildende tiefer gelegene Korb 19. Aus der Zeichnung ist ferner ersichtlich, daß die Längsholme 5 in etwa parallel zu den Längsseiten des oberen Korbes 14 verlaufen. Ergänzend ist ein Teil des Fahrgestelles 4' eines rückwärtigen Einkaufswagens 1' eingezeichnet, der mit dem vorausbefindlichen Einkaufswagen 1 gestapelt ist. Ein Teil der beiden Längsholme 5 des rückwärtigen Einkaufswagens 1' befindet sich in den Zwischenräumen 24 des vorausbefindlichen Einkaufswagens 1.

## Patentansprüche

1. Stapelbarer Einkaufswagen (1), mit einem Fahrgestell (2), das sich in Schieberichtung verjüngt, mit einem oberen, in gleicher Weise konisch gestalteten Korb (14) mit rückwärtig schwenkbarer Wand (16), mit einer im hinteren Bereich (4) des Fahrgestelles (2) vorgesehenen Schiebeeinrichtung (13) und mit einem unteren, ebenfalls konisch gestalteten und mit einer schwenkbaren Wand (21) ausgestatteten Korb (19), dadurch **gekennzeichnet**, daß das Fahrgestell (2) mit zwei Längsholmen (5) ausgestattet ist, die einen unteren, die Fahrrollen (12) tragenden Abschnitt (6) und einen nach oben und nach hinten, die Schiebeeinrichtung (13) tragenden Abschnitt (7) aufweisen, wobei sich der untere Korb (19), bezogen auf den oberen Korb (14), entgegengesetzt zur Schieberichtung verjüngt und die schwenkbare Wand (21) des unteren Korbes (19) im vorderen Bereich (3) des Fahrgestelles (2) angeordnet ist.

2. Stapelbarer Einkaufswagen (1) nach Anspruch 1, dadurch **gekennzeichnet**, daß der obere Korb (14) an den Längsholmen (5) befestigt ist und auf einer die Längsholme (5) verbindenden Querstrebe (17) abgestützt ist.

3. Stapelbarer Einkaufswagen (1) nach Anspruch 1 oder 2, dadurch **gekennzeichnet,** daß der untere Korb (19) an den Längsholmen (5) befestigt ist und auf einer die Längsholme (5) verbindenden Querstrebe (23) abgestutzt ist.

4. Stapelbarer Einkaufswagen (1) nach einem der Ansprüche 1 bis 3, dadurch **gekennzeichnet**, daß zwischen den Seitenwänden (22) des unteren Korbes (19) und dem unteren horizontalen Abschnitt (6) der Längsholme (5) je ein Zwischenraum (24) gebildet ist.
